# EUROPÄISCHE PATENTSCHRIFT

(11) **EP 3 213 983 B1**
(45) Veröffentlichungstag und Bekanntmachung des Hinweises auf die Patenterteilung: **15.01.2020**
(21) Anmeldenummer: 17165789.3
(22) Anmeldetag: 07.04.2016
(51) Int. Cl.: B62D 55/253, B62D 55/26

(54) **KETTENSTEGANORDNUNG EINER LAUFWERKSKETTE EINER PISTENRAUPE UND VERFAHREN ZUR HERSTELLUNG EINES KETTENSTEGPROFILS FÜR EINE DERARTIGE KETTENSTEGANORDNUNG**
CHAIN BRIDGE ASSEMBLY OF A DRIVE CHAIN OF A PISTE CATERPILLAR, METHOD FOR PRODUCING A CHAIN BRIDGE PROFILE FOR SUCH A CHAIN BRIDGE ASSEMBLY
SYSTÈME D'ÉTANÇONS D'UNE CHENILLE D'UNE DAMEUSE ET PROCÉDÉ DE FABRICATION D'UN PROFILÉ D'ÉTANÇON POUR UN TEL SYSTÈME D'ÉTANÇONS

(30) Priorität: 15.04.2015 DE 102015206775
(43) Veröffentlichungstag der Anmeldung: 06.09.2017
(62) Teilanmeldung aus: 16164292.1
(73) Patentinhaber: Kässbohrer Geländefahrzeug AG, 88471 Laupheim (DE)
(72) Erfinder: Junginger, Bernd, 89134 Blaustein-Bermaringen (DE); Kuhn, Michael, 88480 Achstetten (DE)
(74) Vertreter: Patentanwälte Ruff, Wilhelm, Beier, Dauster & Partner mbB

(56) Entgegenhaltungen:
- EP-A1- 2 778 026
- EP-A1- 2 778 027
- WO-A1-2011/127554
- AT-B- 384 792
- DE-U1- 29 602 940
- US-A- 5 354 124
- US-A1- 2010 276 991
- US-A1- 2013 147 262

## Beschreibung

Die Erfindung betrifft eine Kettensteganordnung einer Laufwerkskette einer Pistenraupe mit einem Kettenstegprofil, sowie mit einem im Bereich einer Bodenseite des Kettenstegprofils an dem Kettenstegprofil vorgesehenen Spurbügel. Die Erfindung betrifft zudem ein Verfahren zur Herstellung eines Kettenstegprofils für eine derartige Kettensteganordnung.

Aus der EP 2 778 026 A2 ist eine Pistenraupe zur Schneeflächenpflege und -bearbeitung bekannt, die über ein Kettenlaufwerk auf dem entsprechenden Untergrund fortbewegt werden kann. Das Kettenlaufwerk umfasst zwei Laufwerksketten, die auf gegenüberliegenden Seiten der Pistenraupe angeordnet sind. Jede Laufwerkskette wird durch jeweils ein Turasrad angetrieben, die Teil eines Antriebssystems der Pistenraupe sind. Jede Laufwerkskette weist mehrere, parallel zueinander in Fahrzeuglängsrichtung verlaufende Bandanordnungen auf, die über mehrere in gleichmäßigen Abständen zueinander angeordnete Kettensteganordnungen miteinander verbunden sind. Jede Kettensteganordnung erstreckt sich in Fahrzeugquerrichtung und damit rechtwinklig zu den Bandanordnungen über mehrere Bandanordnungen hinweg. Jede Kettensteganordnung umfasst ein metallisches Kettenstegprofil sowie einen Spurbügel, der dazu dient, mit dem Turasrad zusammenzuwirken, um einen Antrieb der Laufwerkskette zu erzielen. Das Kettenlaufwerk der Pistenraupe weist neben den Turasrädern auf jeder Laufwerksseite zusätzlich mehrere Laufräder auf, die in der vertikalen Fahrzeuglängsebene angeordnet sind, in der auch das Turasrad läuft. Die Spurbügel der Kettensteganordnungen wirken daher auch mit den Laufrädern zusammen, um ein entsprechendes Umlaufen der jeweiligen Laufwerkskette zu erzielen. Die Spurbügel und die Kettenstegprofile der Kettensteganordnungen sind voneinander getrennte Bauteile, die über Schraubverbindungen zu der jeweiligen Kettensteganordnung miteinander verbunden sind. Eine Kettensteganordnung mit den Merkmalen des Oberbegriffs von Anspruch 1 ist in der WO2011127554 gezeigt.

Aufgabe der Erfindung ist es, eine Kettensteganordnung der eingangs genannten Art zu schaffen, die eine verbesserte Funktion und eine verbesserte Haltbarkeit aufweisen.

Diese Aufgabe wird für die Kettensteganordnung dadurch gelöst, dass das Kettenstegprofil mit einem sich über seine Länge in einer Breite ändernden Querschnitt versehen ist, wobei das Kettenstegprofil ein längserstrecktes Profil darstellt, dessen Breite in einem mittleren Bereich gegenüber den zu den gegenüberliegenden Stirnenden hinführenden Bereichen vergrößert ist. Unter der Länge des Kettenstegprofils wird die Längserstreckung des Kettenstegprofils verstanden, die in montiertem Zustand des Kettenstegprofils an einer entsprechenden Laufwerkskette einer Pistenraupe in Fahrzeugquerrichtung erstreckt ist. Unter der Breite des Kettenstegprofils ist die Breitenerstreckung zu verstehen, die bei montiertem Zustand des Kettenstegprofils an einer Laufwerkskette einer Pistenraupe in Fahrzeuglängsrichtung erstreckt ist. Die Breite des Kettenstegprofils erstreckt sich demzufolge orthogonal zu der Länge in einer Horizontalebene, wohingegen eine Höhe des Kettenstegprofils sich ebenfalls orthogonal zur Länge, aber in Hochrichtung des Kettenstegprofils erstreckt. Dadurch, dass das Kettenstegprofil einen sich über seine Länge in der Breite ändernden Querschnitt aufweist, ist das Kettenstegprofil höher belastbar als bekannte Kettenstegprofile, deren Breite sich über ihre Länge nicht ändert. Das Kettenstegprofil kann aus einer Aluminiumlegierung oder einer Stahllegierung oder auch aus einem Faserverbundwerkstoff, insbesondere einem kohle- oder glasfaserverstärkten Kunststoff, hergestellt werden.

In Ausgestaltung der Erfindung ist die Querschnittsänderung des Kettenstegprofils in Abhängigkeit von Belastungen des Kettenstegprofils in einem Pistenraupenbetrieb der Laufwerkskette vorgesehen. Der Querschnitt jedes Kettenstegprofils weist demzufolge an den Abschnitten höherer Belastung eine größere Breite und an den Abschnitten geringerer Belastung eine geringere Breite auf. Die auftretenden Belastungen an den Kettenstegprofilen im Betrieb der Laufwerkskette können empirisch ermittelt oder über geeignete Konstruktionsprogramme berechnet werden, insbesondere unter Zuhilfenahme einer Finite-Elemente-Analyse.

In weiterer Ausgestaltung der Erfindung ist die über die Länge des Kettenstegprofils in seiner Breite vorgenommene Querschnittsänderung in Abhängigkeit von einem Verlauf eines Widerstandsmoments des Kettenstegprofils in dem Pistenraupenbetrieb der Laufwerkskette gestaltet. Besonders hohe Belastungen treten im Bereich der Positionierung der Spurbügel an den Kettenstegprofilen auf, so dass die Kettenstegprofile der Laufwerkskette im Bereich der Positionierung der Spurbügel die größte Breite aufweisen.

In weiterer Ausgestaltung der Erfindung ist eine Breite des Kettenstegprofils im Bereich des Spurbügels größer als an gegenüberliegenden Stirnendbereichen des Kettenstegprofils. Im Bereich des Spurbügels werden Antriebskräfte des Kettenlaufwerks auf die Kettensteganordnung übertragen, so dass dort die größten Kräfte auftreten. Die gegenüberliegenden Stirnendbereiche jedes Kettenstegprofils hingegen sind weniger belastet, so dass dort eine geringere Breite genügt, um eine ausreichende Stabilität des Kettenstegprofils zu erzielen.

In weiterer Ausgestaltung der Erfindung ist vorgesehen, dass der Spurbügel an dem Kettenstegprofil einstückig ausgebildet ist. Damit ist der Spurbügel einstückig im Kettenstegprofil integriert, so dass sich insgesamt eine einteilige Kettensteganordnung ergibt. Hieraus resultiert eine Bauteilreduzierung. Darüber hinaus ist keine Montage zwischen Spurbügel und Kettenstegprofil mehr notwendig. Zwischen Spurbügel und Kettenstegprofil ergeben sich auch keine unterschiedlichen Steifigkeitsübergänge mehr im Vergleich zum Stand der Technik, bei dem der Spurbügel als separates Bauteil an das Kettenstegprofil montiert wird. Die einstückige Gestaltung der Kettensteganordnung aus Kettenstegprofil und einstückig integriertem Spurbügel ermöglicht zudem eine Gewichtsreduzierung der Kettensteganordnung. Durch die reduzierte Anzahl von Bauteilen ergibt sich auch eine vereinfachte Lagerung, wodurch sich neben Montagekosten auch Lagerkosten einsparen lassen. Die Herstellung einer entsprechenden Kettensteganordnung kann durch ein geeignetes Herstellungsverfahren aus einer Aluminiumlegierung oder einer Stahllegierung erfolgen. Das Herstellverfahren kann ein Hydroforming, d.h. ein Innenhochdruckumformen oder auch ein Gussverfahren, umfassen. Alternativ kann die Kettensteganordnung aus einem Faserverbundwerkstoff hergestellt werden. Je nach Wahl des insbesondere kohle- oder glasfaserverstärkten Werkstoffs werden geeignete Laminierungsverfahren eingesetzt, um die Kettensteganordnung herzustellen.

In Ausgestaltung der Erfindung ist der Spurbügel an der Bodenseite des Kettenstegprofils einstückig ausgebildet. Unter der Bodenseite des Kettenstegprofils ist die Seite zu verstehen, die im montierten Zustand an der Laufwerkskette in Richtung des Turasrads oder der entsprechenden Laufräder weist.

Für das Verfahren zur Herstellung eines Kettenstegprofils für eine Kettensteganordnung nach der vorhergehenden Beschreibung wird die der Erfindung zugrundeliegende Aufgabe dadurch gelöst, dass in einem ersten Verfahrensschritt eine Gestaltung des Kettenstegprofils bezüglich geometrischer Formen, Materialwahl und Materialdicke anhand von Daten berechnet wird, die Biege- und Torsionsbelastungen des Kettenstegprofils bei einem Einsatz an einer Laufwerkskette einer Pistenraupe im Betrieb der Pistenraupe entsprechen, und dass in wenigstens einem weiteren Verfahrensschritt das Kettenstegprofil derart hergestellt wird, dass Bereiche mit berechneter höherer Belastung gegenüber Bereichen mit berechneter geringerer Belastung verstärkt ausgeführt werden. Vorzugsweise werden die Bereiche mit berechneter höherer Belastung mit einem höheren Widerstandsmoment versehen als die übrigen Bereiche. Durch das Herstellungsverfahren ist eine belastungsoptimierte Herstellung von Kettenstegprofilen ermöglicht. Dies kann zu Materialeinsparungen führen, die Herstellkosten für ein entsprechendes Kettenstegprofil reduzieren.

Erfindungsgemäß wird das Kettenstegprofil in einem Gussverfahren oder als Strangpressprofil aus einer Aluminium- oder Stahllegierung hergestellt und anschließend durch Innenhochdruckumformung in seine Endform gebracht. Die Innenhochdruckumformung wird auch als Hydroforming bezeichnet. Alternativ zu dem Strangpressverfahren und dem anschließenden Hydroforming kann das Kettenstegprofil auch einstufig in einem Gussverfahren hergestellt werden.

In weiterer Ausgestaltung der Erfindung wird das Kettenstegprofil aus einem faserverstärkten Werkstoff, insbesondere aus einem carbon- oder glasfaserverstärkten Kunststoff, hergestellt. Als Herstellungsverfahren sind geeignete Laminierungsverfahren vorgesehen, die für die Herstellung von Produkten aus faserverstärkten Werkstoffen grundsätzlich bereits bekannt sind. Durch die Herstellung des Kettenstegprofils aus einem faserverstärkten Werkstoff ist es möglich, Gewicht gegenüber herkömmlichen metallischen Kettenstegprofilen einzusparen. Die physikalischen Eigenschaften des faserverstärkten Werkstoffs sind derart gewählt, dass der faserverstärkte Werkstoff in einem Temperaturbereich von wenigstens zwischen -70 °C und +100 °C seine Eigenschaften nicht oder nahezu nicht verändert. Dies ist vorteilhaft, da entsprechend hergestellte Kettenstegprofile für Laufwerksketten von Pistenraupen eingesetzt werden, die in Schnee und Eis bei hohen Minustemperaturen unterwegs sein können.

In weiterer Ausgestaltung der Erfindung umfasst die Berechnung der Gestaltung des Kettenstegprofils eine Finite-Elemente-Analyse. Hierdurch ist eine sehr genaue Berechnung von höher oder geringer belasteten Bereichen des Kettenstegprofils erzielbar.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Frontansicht eine Pistenraupe mit einem Kettenlaufwerk, das zwei Laufwerksketten gemäß einer Ausführungsform der Erfindung umfasst,
- Fig. 2: in vergrößerter Darstellung ein Kettenstegprofil einer Ausführungsform einer erfindungsgemäßen Kettensteganordnung, die für eine Laufwerkskette nach Fig. 1 eingesetzt wird,
- Fig. 3: in perspektivischer Darstellung schräg von unten das Kettenstegprofil nach Fig. 2,
- Fig. 4: in perspektivischer Darstellung das Kettenstegprofil nach Fig. 3,
- Fig. 5: ein weiteres Kettenstegprofil für eine weitere Ausführungsform einer erfindungsgemäßen Kettensteganordnung ähnlich dem Kettenstegprofil nach den Fig. 2 bis 4,
- Fig. 6: eine weitere Ausführungsform einer erfindungsgemäßen Kettensteganordnung mit einem Kettenstegprofil sowie einem einstückig integrierten Spurbügel,
- Fig. 7: die Kettensteganordnung nach Fig. 6 in anderer perspektivischer Darstellung,
- Fig. 8: eine weitere Ausführungsform einer erfindungsgemäßen Kettensteganordnung ähnlich Fig. 6 und 7,
- Fig. 9: eine Seitenansicht der Kettensteganordnung nach Fig. 8,
- Fig. 10: in schematischer Darstellung die Kettensteganordnung nach Fig. 9 mit beidseitig anschließenden Bandabschnitten einer Bandanordnung,
- Fig. 11: in perspektivischer Darstellung einen Ausschnitt einer Laufwerkskette ähnlich Fig. 1 mit mehreren erfindungsgemäßen Kettensteganordnungen und Bandabschnitten von Bandanordnungen, die direkt mit Kettenstegprofilen der Kettensteganordnungen verbunden sind, und
- Fig. 12: in vergrößerter Darstellung in einer Seitenansicht den Ausschnitt der Laufwerkskette nach Fig. 11 mit Kettenstegprofilen ähnlich Fig. 9.

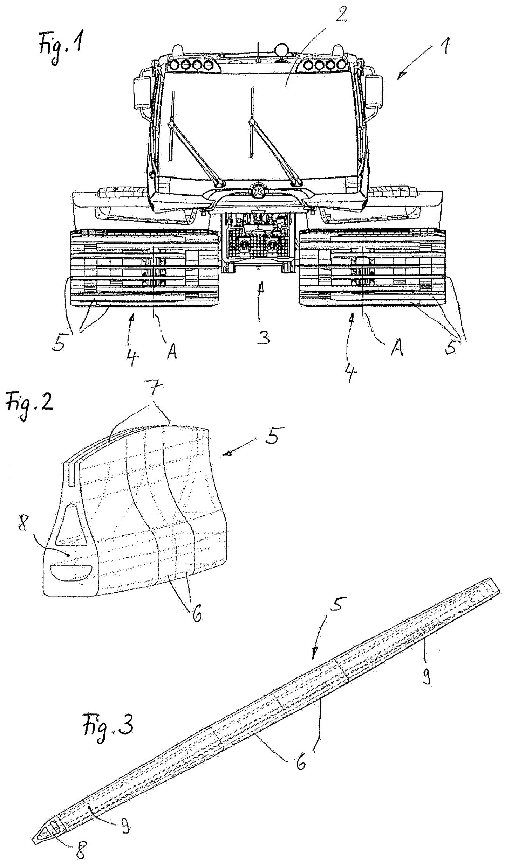

Eine Pistenraupe 1 nach Fig. 1 stellt ein Kettenfahrzeug dar, das in grundsätzlich bekannter Weise ein Fahrgestell 3 sowie ein Fahrerhaus 2 umfasst. Zur Fortbewegung der Pistenraupe 1 ist ein Kettenlaufwerk vorgesehen, das auf gegenüberliegenden Längsseiten des Fahrgestells jeweils eine Laufwerkskette 4 umfasst. Auf den gegenüberliegenden Längsseiten des Fahrgestells 3 ist jeweils heckseitig ein Turasrad vorgesehen, die durch ein Antriebssystem der Pistenraupe 1 angetrieben werden. Das Turasrad auf jeder der beiden Längsseiten des Fahrgestells 3 ist in einer Laufwerksebene A angeordnet, die jeweils eine vertikale und in Fahrzeuglängsrichtung erstreckte Fahrzeugebene bildet. In jeder Laufwerksebene A sind außer dem Turasrad noch mehrere Laufräder über die Länge des Kettenlaufwerks verteilt angeordnet, die ebenfalls am Fahrgestell 3 gelagert sind. Über die Laufräder und das Turasrad auf jeder Laufwerksseite ist die jeweilige Laufwerkskette 4 geführt. Beide Laufwerksketten 4 sind spiegelsymmetrisch zueinander, im Übrigen jedoch identisch zueinander ausgeführt, so dass nachfolgend lediglich auf eine Laufwerkskette näher eingegangen wird. Für die gegenüberliegende Laufwerkskette 4 gilt das Gesagte in analoger Weise.

Die Laufwerkskette 4 setzt sich zusammen aus mehreren in Kettenlaufrichtung erstreckten und zueinander parallelen Bandanordnungen, auf denen eine Vielzahl von Kettensteganordnungen gehalten ist. Jede Kettensteganordnung setzt sich aus einem Kettenstegprofil 5 sowie aus einem Spurbügel zusammen. Die Spurbügel sind in der Laufwerksebene A angeordnet und laufen über das Turasrad und die übrigen Laufräder, um eine Führung der jeweiligen Laufwerkskette 4 und eine Übertragung der Antriebskraft des jeweiligen Turasrads auf die Laufwerkskette 4 zu erzielen.

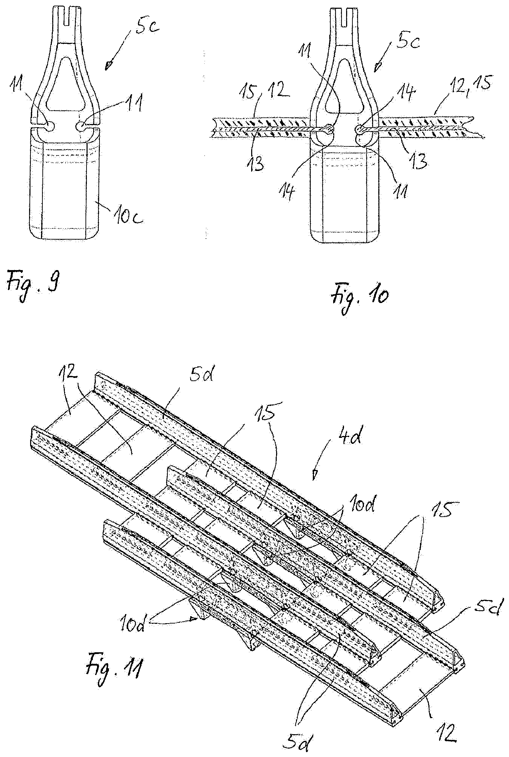

Die Bandanordnungen können als durchgängig umlaufende Bandanordnungen oder auch gemäß Fig. 10 bis 12 als Vielzahl von in einer Reihe hintereinander angeordneten Bandabschnitten ausgeführt sein, wie nachfolgend näher beschrieben wird.

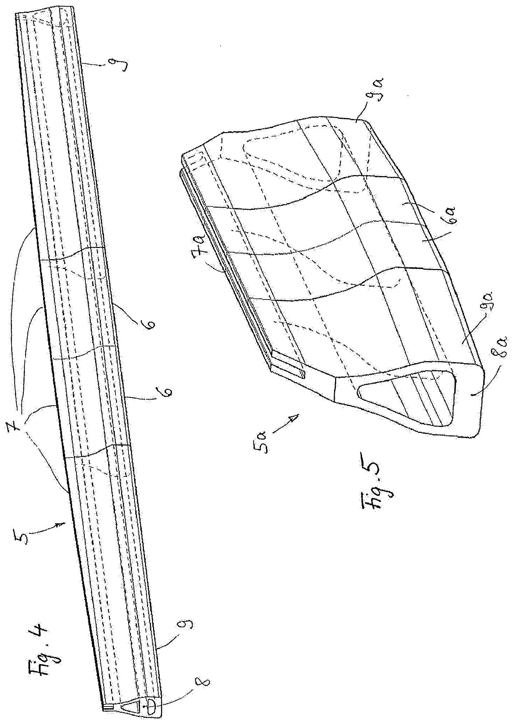

Die anhand der Fig. 1 schematisch dargestellten Kettensteganordnungen weisen jeweils ein Kettenstegprofil 5 auf, wie es anhand der Fig. 2 bis 4 dargestellt ist. Das Kettenstegprofil 5 gemäß den Fig. 2 bis 4 ist aus einer Aluminiumlegierung oder einer Stahllegierung insbesondere in einem Strangpressverfahren hergestellt und anschließend durch Innenhochdruckumformen (Hydroforming) zu der anhand der Fig. 2 bis 4 dargestellten Form umgeformt. Alternativ ist das Kettenstegprofil 5 durch ein Gussverfahren hergestellt. Anhand der Fig. 2 bis 4 ist erkennbar, dass das Kettenstegprofil 5 ein längserstrecktes Profil darstellt, dessen Breite in einem mittleren Bereich 6 gegenüber den zu den gegenüberliegenden Stirnenden hinführenden Bereichen 9 vergrößert ist. Zudem ist anhand der Fig. 2 und 4 erkennbar, dass eine Oberseite 7 des Kettenstegprofils 5 über die Länge des Kettenstegprofils 5 bombiert, d.h. mit einer in einer vertikalen Mittellängsebene des Kettenstegprofils 5 konvex nach oben zeigenden Krümmung versehen ist. In den mittleren Bereichen 6 des Kettenstegprofils 5 weist demzufolge das Kettenstegprofil 5 eine größere Höhe auf als an seinen gegenüberliegenden Stirnendbereichen. Die größte Höhe des Kettenstegprofils 5 ist exakt in der Mitte zwischen den mittleren Bereichen 6 vorgesehen. Die Oberseite 7 ist mit einem nach oben offenen Halteschlitz versehen, in die eine nicht dargestellte Verschließschiene einsetzbar ist.

Das Kettenstegprofil 5 ist als Hohlprofil ausgeführt, das zwei über die gesamte Länge des Kettenstegprofils 5 durchgängig erstreckte Hohlräume umfasst. Die beiden Hohlräume sind in Abstand übereinander angeordnet und durch einen Verschraubungssteg 8 voneinander getrennt. Der Verschraubungssteg 8 wird nach der Herstellung des Kettenstegprofils 5 von einer Bodenseite des Kettenstegprofils 5 her mit Gewindebohrungen versehen, die als Aufnahme für entsprechende Befestigungsschrauben dienen, die zur Befestigung jeweils eines Spurbügels sowie gegebenenfalls zur Befestigung der Bandanordnungen an der Bodenseite des jeweiligen Kettenstegprofils 5 dienen.

Die Verbreiterung des Kettenstegprofils 5 zur Mitte hin erfolgt dadurch, dass gegenüberliegende Seitenwandungen des Kettenstegprofils 5 sich ausgehend von den gegenüberliegenden Stirnseiten des Kettenstegprofils 5 über die Länge des Kettenstegprofils 5 zur Mitte hin allmählich stetig aufweiten und damit verbreitern. Dies ist gut anhand der Fig. 3 erkennbar. Die entsprechende Aufweitung erfolgt vorzugsweise durch Innenhochdruckumformen des Kettenstegprofils 5, nachdem in einem ersten Verfahrensschritt der Profilrohling durch Strangpressen hergestellt wurde. Die Hohlräume in dem Kettenstegprofil 5 sind dazu geeignet, das Innenhochdruckumformen bei Drücken von etwa 2000 bar umzusetzen. Dabei werden die gegenüberliegenden Stirnseiten jedes Kettenstegprofils 5 während des Umformvorgangs verschlossen und abgedichtet.

Das Kettenstegprofil 5a gemäß Fig. 5 entspricht im Wesentlichen dem zuvor ausführlich beschriebenen Kettenstegprofil 5 gemäß den Fig. 2 bis 4, so dass nachfolgend zur Vermeidung von Wiederholungen lediglich auf die Unterschiede des Kettenstegprofils 5a eingegangen wird. Wesentlicher Unterschied des Kettenstegprofils 5a nach Fig. 5 ist es, dass dort im Inneren des Kettenstegprofils lediglich ein einzelner, durchgängig über eine Länge und eine Höhe des Kettenstegprofils erstreckter Hohlraum vorgesehen ist. Ein Boden des Kettenstegprofils 5a dient als Verschraubungssteg 8a. Auch bei dem Kettenstegprofil 5a nach Fig. 5 erweitert sich eine Breite des Kettenstegprofils von den gegenüberliegenden Stirnseiten her jeweils zur Mitte hin, wobei sich mittlere Bereiche 6a ergeben, die einen breiteren Querschnitt aufweisen als die Stirnseiten des Kettenstegprofils 5a.

Anhand der Fig. 5 ist erkennbar, dass sich ein Querschnitt des Kettenstegprofils 5a in den mittleren Bereichen 6a nicht verändert. Vielmehr erfolgt die Erweiterung von der schmaleren Breite gemäß der Stirnseite in Fig. 5 in den außenliegenden Bereichen 9a bis zu einem Übergang zum mittleren Bereich 6a. In beiden mittleren Bereichen 6a, die sich beidseitig einer Mittelquerebene des Kettenstegprofils 5a anschließen, ändert sich der Querschnitt nicht. Dies bedeutet, dass gegenüberliegende Seitenwandungen der mittleren Bereiche 6a in Längsrichtung des Kettenstegprofils 5a parallel verlaufen. Eine Oberseite 7a des Kettenstegprofils 5a ist nicht bombiert gestaltet, sondern verläuft geradlinig. Auch die Oberseite 7a ist mit einem nach oben offenen Halteschlitz für eine entsprechende Verschleißschiene versehen. Das Kettenstegprofil 5a ist an seinen gegenüberliegenden Stirnseiten oberhalb des Hohlraums durch spanende Bearbeitung angeschrägt.

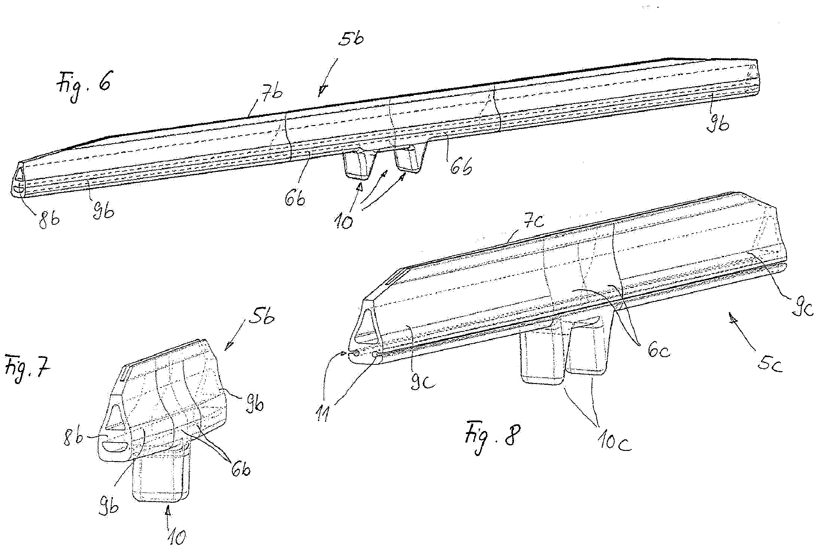

Das Kettenstegprofil 5b gemäß den Fig. 6 und 7 entspricht im Wesentlichen dem Kettenstegprofil 5 gemäß den Fig. 2 bis 4, wobei eine Oberseite 7b analog der Oberseite 7a des Kettenstegprofils 5a nach Fig. 5 gestaltet ist.

Wesentlicher Unterschied bei dem Kettenstegprofil 5b nach Fig. 6 ist es, dass bei dieser Ausführungsform im Bereich einer Bodenseite an den mittleren Bereichen 6b ergänzend ein Spurbügel 10 einstückig angeformt ist. Durch die Integration des Spurbügels 10 in das Kettenstegprofil wird eine einstückige und einteilig handhabbare Kettensteganordnung geschaffen. Die einstückige Integration des Spurbügels 10 kann bei einer Herstellung der Kettensteganordnung aus einer Aluminiumlegierung oder einer Stahllegierung ebenfalls durch einen Innenhochdruckumformvorgang erfolgen. Alternativ kann die Kettensteganordnung mit dem Kettenstegprofil 5b und dem einstückig angeformten Spurbügel 10 auch aus einem faserverstärkten Werkstoff, insbesondere einem carbon- oder glasfaserverstärkten Kunststoff, hergestellt werden. Auch die Kettensteganordnung 5b nach den Fig. 6 und 7 weist einen Verschraubungssteg 8b auf, wie er in analoger Weise aus der Ausführungsform nach den Fig. 2 bis 4 bereits bekannt ist.

Eine Kettensteganordnung nach den Fig. 8 bis 10 entspricht im Wesentlichen der Kettensteganordnung nach den Fig. 6 und 7. Identische oder funktionsgleiche Abschnitte werden mit gleichem Bezugszeichen unter Hinzufügung des Buchstabens c versehen. Die Hinzufügung der Buchstaben a, b, c und d bei den Ausführungsformen gemäß den Fig. 1 bis 12 erfolgt in gleicher Weise dadurch, dass funktionsgleiche oder identische Abschnitte der Kettensteganordnungen mit den gleichen Ziffern unter Hinzufügung der unterschiedlichen Buchstaben a, b, c, d versehen werden. Auch die Kettensteganordnung mit dem Kettenstegprofil 5c weist demzufolge einen breiten Querschnitt auf, der sich von den gegenüberliegenden Stirnseiten her zur Mitte hin erweitert. Bodenseitig der erweiterten mittleren Bereiche 6c ist der Spurbügel 10c einstückig ausgeformt. Maßgeblicher Unterschied der Kettensteganordnung zu der Kettensteganordnung nach den Fig. 6 und 7 ist es neben dem Fehlen eines Verschraubungsstegs, dass das Kettenstegprofil 5c auf seinen gegenüberliegenden Längsseiten mit jeweils einer Aufnahmenut 11 versehen ist, die jeweils seitlich nach außen offen ist. Die jeweilige Aufnahmenut 11 dient als Aufnahmeprofilierung im Sinne der Erfindung und weist einen freien Querschnitt auf, der sich von einem Grund der jeweiligen Aufnahmenut 11 aus zur Seite hin verjüngt, so dass die einander zugewandten Grundseiten der beiden Aufnahmenuten 11 eine größere Höhe aufweisen als die zur Seite hin offenen Austrittsschlitze der jeweiligen Aufnahmenut 11. Der nach innen verbreiterte freie Querschnitt definiert für jede Aufnahmenut 11 relativ zu dem jeweiligen Austrittsschlitz einen Hinterschnitt. Die Aufnahmenut 11 weist auf jeder Längsseite der Kettensteganordnung einen über die gesamte Länge durchgängig gleichen freien Querschnitt auf. Beide Aufnahmenuten 11 sind zu beiden Stirnseiten des Kettenstegprofils 5c hin offen, wie anhand der Fig. 8 und 9 erkennbar ist.

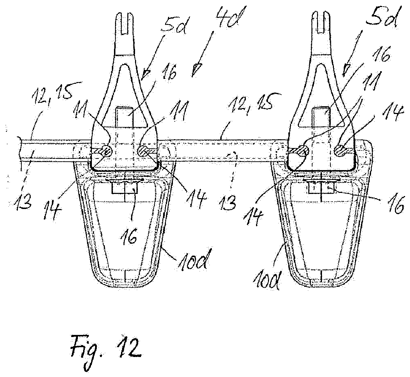

Anhand der Fig. 12 ist ein weiteres Kettenstegprofil 5d erkennbar, das im Wesentlichen so ausgeführt ist wie die Kettensteganordnung nach Fig. 8 und 9 mit dem Unterschied, dass bei der Kettensteganordnung nach Fig. 12 ein Spurbügel 10d als separates Bauteil von unten her an die Bodenseite des Kettenstegprofils 5d angefügt und mithilfe von Schraubverbindungen 15 an der Bodenseite des Kettenstegprofils 5d festgelegt ist. Auch das Kettenstegprofil 5d weist Aufnahmenuten 11 an den gegenüberliegenden Längsseiten des Kettenstegprofils 5d unterhalb des Hohlraums auf, deren freie Querschnitte identisch gestaltet sind wie die freien Querschnitte der Aufnahmenuten 11 der Kettenstegprofils 5c.

Sowohl bei dem Kettenstegprofil 5c der Kettensteganordnung als auch bei dem Kettenstegprofil 5d dienen die Aufnahmenuten an den gegenüberliegenden Längsseiten des Kettenstegprofils 5c, 5d dazu, stirnseitige Schlossprofilierungen 14 von anschließenden Bandabschnitten 12, 15 aufzunehmen, wie es anhand der Fig. 10 und 11 erkennbar ist. Die Bandanordnungen der Laufwerkskette 4d, die die Kettensteganordnungen 5d, 10d tragen, werden durch eine Vielzahl von Bandabschnitten 12, 15 gebildet, die jeweils an ihren in Kettenlaufrichtung weisenden gegenüberliegenden Stirnenden mit wenigstens einer zapfenartig verbreiterten Schlossprofilierung 14 versehen sind. Die Bandabschnitte 12, 15 bilden flexible Bandstreifen, deren Kern jeweils durch einen oder mehrere Verstärkungsstränge 13, vorzugsweise aus Metallseilen oder Metallgeflechtbändern, gebildet ist, die von einem Elastomermaterial umschlossen sind, das ergänzend faserverstärkt sein kann. Die Verstärkungsstränge 13 ragen mit entsprechenden Fortsätzen über die Stirnseiten der Bandabschnitte 12, 15 in Kettenlaufrichtung ab und bilden dort einen kurzen Haltestrang, der in den zapfen- oder bolzenförmigen Haltekopf 14 übergeht. Der Haltekopf 14 ist gegenüber dem Haltestrang verdickt. Sowohl der Haltestrang als auch der Haltekopf sind in ihrem Querschnitt komplementär zu dem freien Querschnitt der jeweiligen Aufnahmenut 11 abgestimmt, um ein stirnseitiges Einschieben der Halteköpfe 14 und der Haltestränge der Bandabschnitte 12, 15 in die jeweilige Aufnahmenut 11 von der jeweiligen Stirnseite des Kettenstegprofils 5c, 5d her zu ermöglichen und einen formschlüssigen Rückhalt in Kettenlaufrichtung zu erzielen.

Anhand der Fig. 11 ist erkennbar, dass jedes Kettenstegprofil 5d mit wenigstens fünf und maximal sechs parallel zueinander verlaufenden Bandanordnungen und damit mit fünf bzw. sechs parallel zueinander ausgerichteten Bandabschnitten 12, 15 verbunden ist. Die Bandabschnitte 15 bilden dabei die Hauptbandanordnungen, während die Bandabschnitte 12 die Nebenbandanordnungen der Laufwerkskette definieren. Die Hauptbandanordnungen flankieren den jeweiligen Spurbügel und nehmen höhere Belastungen auf als die Nebenbandanordnungen.

Alle Bandabschnitte 12, 15 werden von einer Stirnseite her in die jeweilige Aufnahmenut 11 des jeweiligen Kettenstegprofils 5c, 5d eingeschoben und solange längs der Länge des jeweiligen Kettenstegprofils 5c, 5d verschoben, bis die fluchtende Ausrichtung mit den zugehörigen anderen Bandabschnitten 12, 15 der jeweiligen Haupt- oder Nebenbandanordnung erreicht ist. In den Aufnahmenuten 11, können zwischen die zueinander beabstandeten Bandabschnitte 12, 15 jeweils noch geeignete Abstandshalter eingeschoben werden, die gewährleisten, dass die Bandabschnitte 12, 15 nach dem Einfädeln in die jeweilige Aufnahmenut 11 des jeweiligen Kettenstegprofils 5d ihre Position in Längsrichtung des Kettenstegprofils 5d nicht verändern. Anstelle von Abstandshaltern können auch andere Arten von Fixiermitteln vorgesehen sein, die die Positionen der Bandabschnitte relativ zu den Kettenstegprofilen in Längsrichtung der Kettenstegprofile, d.h. quer zur Kettenlaufrichtung, fixieren. Zudem sind den Kettenstegprofilen nicht dargestellte stirnseitige Verschlussmittel zugeordnet, die gewährleisten, dass die Schlossprofilierungen der Bandabschnitte, d.h. insbesondere die Halteköpfe 14, während des Betriebs der jeweiligen Laufwerkskette nicht stirnseitig aus den Aufnahmenuten 11 herausgleiten.

Die Gestaltung der Kettenstegprofile der Laufwerksketten 4, 4d gemäß den Fig. 1 bis 12 erfolgt zunächst konstruktiv durch Berechnung der auf die Kettenstegprofile im Laufwerksbetrieb der jeweiligen Laufwerkskette an der Pistenraupe wirkenden Belastungen. Eine derartige Berechnung und Konstruktion erfolgt vorzugsweise unter Zuhilfenahme einer Finite-Elemente-Analyse (FEA). Die so ermittelten Daten der Dimensionierung der Kettenstegprofile werden den anschließenden Herstellungsverfahren zugrunde gelegt.

Bei den Ausführungsformen gemäß den Fig. 2 bis 5 und 12 kann der Spurbügel alternativ oder ergänzend zu einer Verschraubung mit dem Kettenstegprofil auch verschweißt sein.

## Patentansprüche

1. Kettensteganordnung einer Laufwerkskette einer Pistenraupe mit einem Kettenstegprofil (5 bis 5d), sowie mit einem im Bereich einer Bodenseite des Kettenstegprofils (5 bis 5d) an dem Kettenstegprofil vorgesehenen Spurbügel (10 bis 10d), **dadurch gekennzeichnet, dass** das Kettenstegprofil (5 bis 5d) mit einem sich über seine Länge in einer Breite ändernden Querschnitt versehen ist, wobei das Kettenstegprofil ein längserstrecktes Profil darstellt, dessen Breite in einem mittleren Bereich (6) gegenüber den zu den gegenüberliegenden Stirnenden hinführenden Bereichen (9) vergrößert ist.

2. Kettensteganordnung nach Anspruch 1, **dadurch gekennzeichnet, dass** die Querschnittsänderung des Kettenstegprofils (5 bis 5d) in Abhängigkeit von Belastungen des Kettenstegprofils (5 bis 5d) in einem Pistenraupenbetrieb der Laufwerkskette (4, 4d) vorgesehen ist.

3. Kettensteganordnung nach Anspruch 2, **dadurch gekennzeichnet, dass** die über die Länge des Kettenstegprofils (5 bis 5d) in seiner Breite vorgenommene Querschnittsänderung in Abhängigkeit von einem Verlauf eines Widerstandsmoments des Kettenstegprofils (5 bis 5d) in dem Pistenraupenbetrieb der Laufwerkskette (4, 4d) gestaltet ist.

4. Kettensteganordnung nach Anspruch 1, **dadurch gekennzeichnet, dass** eine Breite des Kettenstegprofils (5 bis 5d) im Bereich des Spurbügels (10 bis 10d) größer ist als an gegenüberliegenden Stirnendbereichen des Kettenstegprofils.

5. Kettensteganordnung nach Anspruch 1, **dadurch gekennzeichnet, dass** der Spurbügel (10, 10c) an dem Kettenstegprofil (5b, 5c) einstückig ausgebildet ist.

6. Kettensteganordnung nach Anspruch 5, **dadurch gekennzeichnet, dass** der Spurbügel (10, 10c) an der Bodenseite des Kettenstegprofils (5b, 5c) einstückig ausgebildet ist.

7. Verfahren zur Herstellung eines Kettenstegprofils für eine Kettensteganordnung nach einem der vorhergehenden Ansprüche, **dadurch gekennzeichnet, dass** in einem ersten Verfahrensschritt eine Gestaltung des Kettenstegprofils bezüglich geometrischer Formen, Materialwahl und Materialdicke anhand von Daten berechnet wird, die Biege- und Torsionsbelastungen des Kettenstegprofils bei einem Einsatz an einer Laufwerkskette einer Pistenraupe im Betrieb der Pistenraupe entsprechen, und dass in wenigstens einem weiteren Verfahrensschritt das Kettenstegprofil derart hergestellt wird, dass Bereiche mit berechneter höherer Belastung gegenüber Bereichen mit berechneter geringerer Belastung verstärkt ausgeführt werden.

8. Verfahren nach Anspruch 7, **dadurch gekennzeichnet, dass** das Kettenstegprofil in einem Gussverfahren oder als Strangpressprofil aus einer Aluminium- oder Stahllegierung hergestellt und anschließend durch Innenhochdruckumformung in seine Endform gebracht wird.

9. Verfahren nach Anspruch 7, **dadurch gekennzeichnet, dass** das Kettenstegprofil aus einem faserverstärkten Werkstoff, insbesondere aus einem carbon- oder glasfaserverstärkten Kunststoff, hergestellt wird

10. Verfahren nach Anspruch 9, **dadurch gekennzeichnet, dass** die Berechnung der Gestaltung des Kettenstegprofils eine Finite-Elemente-Analyse umfasst.

## Claims

1. Chain grouser arrangement for a crawler chain of a tracked piste grooming vehicle, having a chain grouser profile (5 to 5d), and having a track bracket member (10 to 10d) provided on the chain grouser profile in the region of a bottom side of the chain grouser profile (5 to 5d),
**characterized in that**
the chain grouser profile (5 to 5d) is provided with a cross section varying in a width along its length, wherein the chain grouser profile presents a longitudinal profile, with the width thereof enlarged in a central region (6) as compared to the regions (9) leading towards the opposite end faces.

2. Chain grouser arrangement according to claim 1, **characterized in that** the cross section variation of the chain grouser profile (5 to 5d) is provided as a function of loads of the chain grouser profile (5 to 5d) during an operation of the crawler chain (4, 4d) of the tracked piste grooming vehicle.

3. Chain grouser arrangement according to claim 2, **characterized in that** the cross section variation made in its width along the length of the chain grouser profile (5 to 5d) is configured as a function of a development of a modulus of resistance of the chain grouser profile (5 to 5d) during the operation of the crawler chain (4, 4d) of the tracked piste grooming vehicle.

4. Chain grouser arrangement according to claim 1, **characterized in that** a width of the chain grouser profile (5 to 5d) in the vicinity of the track bracket member (10 to 10d) is greater than on opposite end face regions of the chain grouser profile.

5. Chain grouser arrangement according to claim 1, **characterized in that** the track bracket member (10, 10c) is formed integrally on the chain grouser profile (5b, 5c).

6. Chain grouser arrangement according to claim 5, **characterized in that** the track bracket member (10, 10c) is formed integrally on the bottom side of the chain grouser profile (5b, 5c).

7. Method for producing a chain grouser profile for a chain grouser arrangement according to any one of the preceding claims, **characterized in that** in a first method step a design of the chain grouser profile is calculated with regard to geometrical shapes, material selection and material thickness based on data which correspond to bending and torsional loads of the chain grouser profile during employment on a crawler chain of a tracked piste grooming vehicle during operation of the tracked piste grooming vehicle, and **in that** in at least one further method step the chain grouser profile is produced such that regions with calculated higher load as compared to regions with calculated lesser load are implemented with reinforcement.

8. Method according to claim 7, **characterized in that** the chain grouser profile is produced in a casting process or as an extruded section from an aluminium alloy or steel alloy and, subsequently, is subject to high internal pressure forming to accomplish its final shape.

9. Method according to claim 7, **characterized in that** the chain grouser profile is produced from a fibre-reinforced material, in particular a carbon fibre or glass fibre reinforced plastic.

10. Method according to claim 9, **characterized in that** the calculation of the design of the chain grouser profile comprises a finite element analysis.

## Revendications

1. Arrangement de crampons de chenille pour une chenille de train de roulement d'un véhicule chenillé avec un profilage de crampon de chenille (5 à 5d), ainsi qu'avec un étrier de voie (10 à 10d) prévu sur le profilage de crampon de chenille dans la région d'un côté inférieure du profilage de crampon de chenille (5 à 5d),
**caractérisé en ce que**
le profilage de crampon de chenille (5 à 5d) est prévu d'une section transversale variant en largeur sur sa longueur, dans lequel le profilage de crampon de chenille présente un profil longitudinal, la largeur du profil étant élargie dans une région (6) centrale par rapport à les régions (9) s'étendant vers les faces frontales opposées.

2. Arrangement de crampons de chenille selon la revendication 1, **caractérisé en ce que** la variation de la section transversale du profilage de crampon de chenille (5 à 5d) est prévue en fonction de charges du profilage de crampon de chenille (5 à 5d) en cours d'un fonctionnement de véhicule chenillé de la chenille de train de roulement (4, 4d).

3. Arrangement de crampons de chenille selon la revendication 2, **caractérisé en ce que** la variation de la section transversale faite en largeur le long de la longueur du profilage de crampon de chenille (5 à 5d) est configurée en fonction d'un cours d'un couple résistant du profilage de crampon de chenille (5 à 5d) en cours du fonctionnement de véhicule chenillé de la chenille de train de roulement (4, 4d).

4. Arrangement de crampons de chenille selon la revendication 1, **caractérisé en ce qu'**une largeur du profilage de crampon de chenille (5 à 5d) dans la région de l'étrier de voie (10 à 10d) est supérieure que dans régions de face frontale opposées du profilage de crampon de chenille.

5. Arrangement de crampons de chenille selon la revendication 1, **caractérisé en ce que** l'étrier de voie (10, 10c) est formé d'un seul tenant sur le profilage de crampon de chenille (5b, 5c).

6. Arrangement de crampons de chenille selon la revendication 5, **caractérisé en ce que** l'étrier de voie (10, 10c) est formé d'un seul tenant sur le côté inférieur du profilage de crampon de chenille (5b, 5c).

7. Procédé de fabrication d'un profilage de crampon de chenille pour un arrangement de crampons de chenille selon l'une quelconque des revendications précédentes, **caractérisé en ce que** dans une première étape de procédé une conception du profilage de crampon de chenille est calculée en ce qui concerne formes géométriques, sélection de matériau et épaisseur de matériau en se fondant sur des données correspondant aux charges de flexion et de torsion du profilage de crampon de chenille lors d'un emploi sur une chenille de train de roulement d'un véhicule chenillé en cours de fonctionnement du véhicule chenillé, et **en ce que** dans au moins une autre étape de procédé le profilage de crampon de chenille est fabriqué de telle manière que régions de charge calculée supérieure par rapport à régions de charge calculée inférieure sont pourvues de renforcement.

8. Procédé selon la revendication 7, **caractérisé en ce que** le profilage de crampon de chenille est fabriqué par un procédé de moulage ou sous forme de profil extrudé à partir d'un alliage d'aluminium ou d'acier et ensuite est soumis à formage sous haute pression interne pour façonner sa forme finale.

9. Procédé selon la revendication 7, **caractérisé en ce que** le profilage de crampon de chenille est fabriqué à partir d'un matériau renforcé de fibres, en particulier à partir d'une matière plastique renforcée aux fibres de carbone ou fibres de verre.

10. Procédé selon la revendication 9, **caractérisé en ce que** le calcul de la conception du profilage de crampon de chenille comporte l'analyse par éléments finis.
